# EUROPÄISCHE PATENTANMELDUNG

(11) **EP 1 076 168 A2**
(43) Veröffentlichungstag der Anmeldung: **14.02.2001**
(21) Anmeldenummer: 00117195.8
(22) Anmeldetag: 11.08.2000
(51) Int. Cl.: F02M 25/028, F02M 31/04

(54) **Befeuchtungsvorrichtung für die Einlassluft von Brennkraftmaschinen**

(30) Priorität: 13.08.1999 DE 19938356
(71) Anmelder: Munters Euroform GmbH, 52072 Aachen (DE)
(72) Erfinder: Wettergard, Jan, 19631 Kungsängen (SE)
(74) Vertreter: Patentanwälte Hauck, Graalfs, Wehnert, Döring, Siemons

(57) **Zusammenfassung**

Es wird eine Vorrichtung zur Befeuchtung der Einlaßluft einer Brennkraftmaschine mit Luftansaugung beschrieben. Die Vorrichtung weist eine Befeuchtungseinrichtung für die Einlaßluft und einen stromauf der Befeuchtungseinrichtung angeordneten Wärmetauscher zum Vorerhitzen der Einlaßluft auf. Die zum Vorerhitzen benötigte Energie entstammt dem Kühlwasser oder dem Abgas der Brennkraftmaschine. Auf diese Weise läßt sich mit geringem Aufwand der NOx-Anteil im Abgas der Brennkraftmaschine wesentlich reduzieren.

## Beschreibung

Die vorliegende Erfindung betrifft eine Vorrichtung zur Befeuchtung der Einlaßluft einer Brennkraftmaschine mit Luftansaugung, die einen Kühlwasserkreis aufweist.

Es ist bekannt, die Einlaßluft von mit Turboladern versehenen Dieselbrennkraftmaschinen zu befeuchten, um auf diese Weise den NOx-Anteil im Abgas zu reduzieren. Ein derartiges Verfahren mit zugehöriger Vorrichtung ist in der WO 95/23286 beschrieben. Hierbei findet eine Befeuchtungseinrichtung Verwendung, die von der Einlaßluft und Wasser durchströmt wird, wobei die Einlaßluft vor der Befeuchtung komprimiert wird und die im Kühlwasser oder den Abgasen der Brennkraftmaschine steckende Energie zum Vorerhitzen des Wassers verwendet wird, bevor dieses in die Befeuchtungseinrichtung eingeführt wird.

Die vorliegende Erfindung betrifft Brennkraftmaschinen, die mit Luftansaugung, d.h. ohne Turbolader, arbeiten.

Der Erfindung liegt die Aufgabe zugrunde, eine Vorrichtung zur Befeuchtung der Einlaßluft einer Brennkraftmaschine mit Luftansaugung zu schaffen, mit der auf besonders einfache Weise mit besonders geringem Aufwand eine NOx-Reduzierung im Abgas der Brennkraftmaschine erreichbar ist.

Diese Aufgabe wird durch eine Vorrichtung zur Befeuchtung der Einlaßluft einer Brennkraftmaschine mit Luftansaugung, die einen Kühlwasserkreislauf aufweist,
mit einer Befeuchtungseinrichtung für die Einlaßluft, durch die die Einlaßluft und Befeuchtungsflüssigkeit strömen und miteinander in Kontakt treten, und
einem stromauf der Befeuchtungseinrichtung angeordneten, zum Vorerhitzen der Einlaßluft dienenden Luft/Wasser-Wärmetauscher oder Luft/Luft-Wärmetauscher, der vom Kühlwasser oder vom Abgas der Brennkraftmaschine und von der Einlaßluft durchströmt wird,
gelöst.

Die Erfindung bezieht sich insbesondere auf Diesel- oder Gasmotoren, was jedoch eine Anwendung bei anderen Brennkraftmaschinen nicht ausschließt.

Eine Vielzahl von alten, im Betrieb befindlichen Brennkraftmaschinen besitzt keinen Turbolader, erzeugt jedoch Abgase mit einem relativ hohen NOx-Anteil. Dies betrifft insbesondere kleinere Dieselbrennkraftmaschinen von Schiffen, Booten, Generatoren etc. Da diese Brennkraftmaschinen in vielen Fällen auf eine maximale Leistung ausgelegt sind, sind die NOx-Emissionen hoch. Derartige Brennkraftmaschinen besitzen in der Regel einen Kühlkreis, in dem Wasser (Süßwasser) zirkuliert.

Die vorliegende Erfindung geht von dem Prinzip aus, die Einlaßluft für die Brennkraftmaschine vorzuerhitzen, und zwar unter Ausnutzung der im Kühlwasser oder dem Abgas der Brennkraftmaschine steckenden Wärmeenergie, und danach die vorerhitzte Einlaßluft zu befeuchten. Die im Kühlwasser steckende Wärmeenergie wird dabei über einen Luft/Wasser-Wärmetauscher auf die Einlaßluft übertragen. Die Einlaßluft wird dabei auf eine Temperatur von 60-70 °C erwärmt, was für die nachfolgende Befeuchtung einen idealen Temperaturbereich darstellt. Es ist dabei eine Feuchtigkeitsaufnahme von etwa 30 g pro kg Trockenluft zu erzielen, was einen einfachen Weg ohne große zusätzliche Investitionen darstellt, um die NOx-Bildung im Abgas wesentlich zu reduzieren.

Die in die Befeuchtungseinrichtung eintretende vorerhitzte Einlaßluft wird in derselben durch die Befeuchtungsflüssigkeit befeuchtet und gekühlt. Als Befeuchtungseinrichtung kommt vorzugsweise eine solche zur Anwendung, wie sie in der vorstehend erwähnten WO 95/23286 oder der nicht veröffentlichten deutschen Patentanmeldung 197 50 181.8 beschrieben ist, wobei eine Gegenstromführung, Kreuzstromführung und/oder Gleichstromführung der in Kontakt tretenden Medien möglich ist.

Eine bevorzugte Ausführungsform der Erfindung zeichnet sich dadurch aus, daß der Luft/Wasser-Wärmetauscher und die Befeuchtungseinrichtung stromauf vom Luftfilter der Brennkraftmaschine angeordnet sind. Hierdurch wird der eigentliche Luftfilter weniger belastet. Eine Anordnung des Luft/Wasser-Wärmetauschers und der Befeuchtungseinrichtung stromab vom Luftfilter ist natürlich ebenfalls möglich.

Eine weitere Ausführungsform der Erfindung, die insbesondere bei Dieselbrennkraftmaschinen von Schiffen Verwendung findet, zeichnet sich dadurch aus, daß die Befeuchtungsflüssigkeit normales Salzwasser (Meerwasser) ist. Derartigen Dieselbrennkraftmaschinen auf Schiffen etc, ist normalerweise ein Meerwasserkreis zugeordnet, der über einen Wärmetauscher zum Kühlen des Kühlwassers der Dieselbrennkraftmaschine verwendet wird, bei dem es sich normalerweise um Süßwasser handelt. Erfindungsgemäß kann nunmehr Salzwasser aus dem bestehenden Salzwasserkreis entnommen und der Befeuchtungseinrichtung zugeführt werden. In dieser wird das Salzwasser mit der vorerhitzten Einlaßluft in Kontakt gebracht, um die Einlaßluft zu befeuchten. Das aus der Befeuchtungseinrichtung wieder austretende Salzwasser kann abgeleitet oder aber über einen Kreislauf wieder in die Zuleitung zur Befeuchtungseinrichtung zurückgepumpt werden. Bei dieser Ausführungsform, bei der das Salzwasser zum Befeuchten einem zum Kühlen des Kühlwassers dienenden vorhandenen Salzwasserkreis entnommen wird, wird das Salzwasser durch die vom Kühlwasser der Verbrennungsmaschine abgegebene Wärmeenergie geringfügig erhitzt, so daß in der Befeuchtungseinrichtung geringfügig vorerhitztes Salzwasser mit der vorerhitzten Luft in Kontakt tritt.

Natürlich muß das Salzwasser nicht unbedingt einem vorhandenen Salzwasserkreislauf entnommen werden. Vielmehr kann dieses auch direkt dem Meer entnommen werden (bei Schiffen, Booten).

Die vorstehend beschriebene Ausführungsform hat den Vorteil, daß kein zusätzliches Süßwasser für die Befeuchtung benötigt wird, dessen Bereitstellung insbesondere auf Schiffen mit beträchtlichem Zusatzaufwand verbunden sein kann. Natürlich schließt dies den normalen Einsatz von Süßwasser (Flußwasser) nicht aus.

Bei der erfindungsgemäßen Lösung erfolgt die Befeuchtung der Einlaßluft auf adiabatische Weise.

Wenn erfindungsgemäß zum Vorerhitzen der Einlaßluft das Abgas der Brennkraftmaschine verwendet und ein Luft/Luft-Wärmetauscher Verwendung findet, kann das Abgas oder ein Teil hiervon direkt den Luft/Luft-Wärmetauscher durchströmen. Das Abgas kann jedoch beispielsweise auch einen zweiten Wärmetauscher passieren, in dem Luft erhitzt wird, die dem Luft/Luft-Wärmetauscher zur Erhitzung der Einlaßluft zugeführt und von dort wieder dem vom Abgas durchströmten Wärmetauscher zugeführt wird. Auch auf diese Weise erfolgt eine Ausnutzung von vorhandener Energie zur Vorerhitzung der Einlaßluft. Im übrigen gilt das bereits zur Vorerhitzung über das Kühlwasser Gesagte.

Eine gezielte Erhitzung des Befeuchtungsmediums (Wasser) wird erfindungsgemäß nicht vorgenommen.

In Weiterbildung der Erfindung sind mehrere Luft/Wasser- oder Luft/Luft-Wärmetauscher/Befeuchtungseinrichtungseinheiten in Einlaßluftströmungsrichtung hintereinander angeordnet. Mit dieser Ausführungsform kann eine besonders exakte Steuerung der Feuchtigkeitsaufnahmemenge der Einlaßluft erfolgen, beispielsweise in Abhängigkeit von der tatsächlichen Wassertemperatur.

Vorzugsweise hat die erfindungsgemäß ausgebildete Vorrichtung eine Einrichtung zur Abtrennung der von der Einlaßluft mitgeführten Fremdpartikel. Eine derartige Einrichtung findet insbesondere Verwendung, wenn als Befeuchtungsmedium Salzwasser eingesetzt wird.

Die Erfindung wird nachfolgend anhand von zwei Ausführungsbeispielen in Verbindung mit der Zeichnung im einzelnen erläutert. Es zeigen:
- Figur 1: eine schematische Darstellung einer Schiffsdieselbrennkraftmaschine mit Luftansaugung, die mit einer Vorrichtung zur Befeuchtung der Einlaßluft versehen ist; und
- Figur 2: eine schematische Darstellung einer Schiffsdieselbrennkraftmaschine, die mit einer zweiten Ausführungsform einer Vorrichtung zur Befeuchtung der Einlaßluft versehen ist.

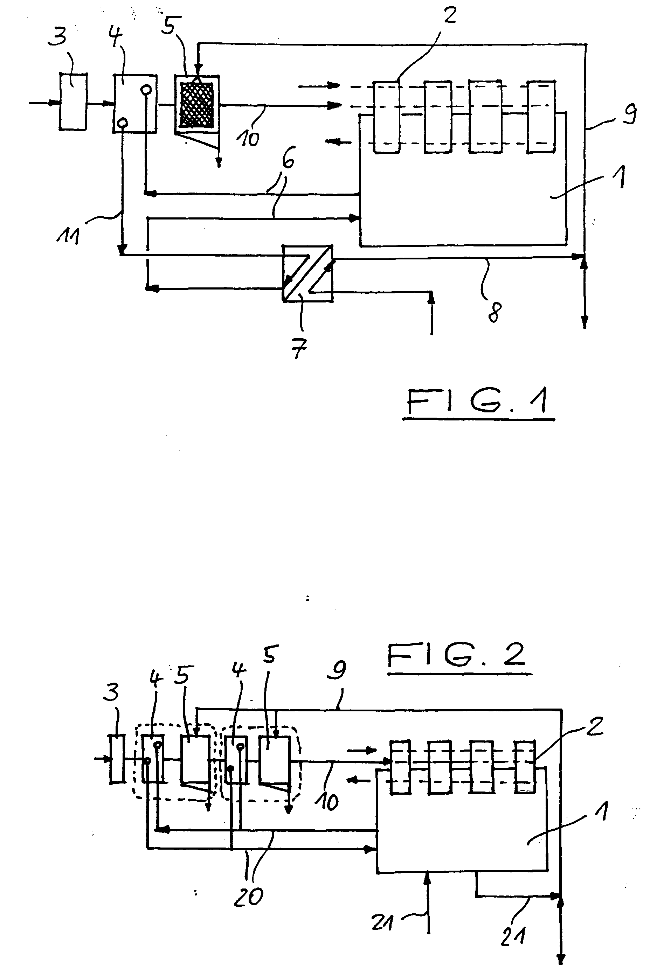

Die in Figur 1 dargestellte Schiffsdieselbrennkraftmaschine hat vier Zylinder 2 und arbeitet mit Luftansaugung, d.h. die Maschine ist nicht mit einem Kompressor oder Turbolader versehen. Die zu den jeweiligen Zylindern 2 führenden Luftansaugstutzen sind im einzelnen nicht dargestellt. Statt dessen ist der Strömungsweg 10 der Einlaßluft angedeutet. Die Einlaßluft passiert auf ihrem Weg in die Zylinder der Brennkraftmaschine einen Luftfilter 3, einen Luft/Wasser-Wärmetauscher 4 und eine Befeuchtungseinrichtung 5.

Die Dieselbrennkraftmaschine 1 besitzt eine Kühlwasserummantelung, von der ein mit 6 bezeichneter Kühlwasserkreis abzweigt. Das aus der Kühlwasserummantelung austretende Kühlwasser gelangt in den Luft/Wasser-Wärmetauscher 4, wobei es den Wärmetauscher in geeigneten Rohrschlangen durchströmt. Das abgekühlte Kühlwasser verläßt den Wärmetauscher 4 über eine Rohrleitung 11 und gelangt in einen Wasser/Wasser-Wärmetauscher 7. In diesem Wärmetauscher wird das Kühlwasser durch Meerwasser, das in einem Meerwasserkreis 8 strömt, gekühlt. Das gekühlte Kühlwasser strömt vom Wärmetauscher 7 in die Kühlwasserummantelung der Brennkraftmaschine 1 zurück.

Durch die im Kühlwasser steckende Wärmeenergie wird die Einlaßluft, die den Luftfilter 3 passiert hat, im Wärmetauscher 4 vorerhitzt, beispielsweise auf einen Bereich von 60-70 °C. Die vorerhitzte Luft, die die Kühlwasserrohrschlangen im Wärmetauscher 4 umströmt hat, tritt aus dem Wärmetauscher 4 aus und durchströmt in Horizontalrichtung eine Befeuchtungseinrichtung 5, die eine Vielzahl von Füllkörpern enthält. Die Befeuchtungseinrichtung 5 wird in Vertikalrichtung von Meerwasser (Salzwasser) durchströmt, das über eine Zweigleitung 9 vom Meerwasserkreis 8 der Oberseite der Befeuchtungseinrichtung 5 zugeführt und dort über eine geeignete Sprüheinrichtung auf die in der Befeuchtungseinrichtung 5 angeordneten Füllkörper versprüht wird. Die vorerhitzte Einlaßluft nimmt beim Passieren der Befeuchtungseinrichtung 5 Feuchtigkeit auf, tritt in Horizontalrichtung aus der Befeuchtungseinrichtung 5 aus und gelangt über die jeweiligen Ansaugstutzen in die Zylinder 2 der Dieselbrennkraftmaschine. Das am unteren Ende der Befeuchtungseinrichtung 5 austretende Salzwasser kann abgeleitet oder im Kreislauf wieder in die Leitung 9 eingeführt werden.

Bei der vorstehend beschriebenen Ausführungsform ist der Wärmetauscher 7 ohnehin vorhanden, um das Kühlwasser (Süßwasser) der Brennkraftmaschine zu kühlen. Zur Befeuchtung der Einlaßluft sind lediglich der Wärmetauscher 4, die Befeuchtungseinrichtung 5 sowie entsprechende Leitungen, Pumpen erforderlich, um das Kühlwasser durch den Wärmetauscher zu wälzen und das Meerwasser aus dem vorhandenen Meerwasserkreis in die Befeuchtungseinrichtung 5 zu leiten. Die Vorrichtung ist somit einfach ausgebildet und nutzt die im Kühlwasser vorhandene Wärmeenergie zum Vorerhitzen der Einlaßluft und das im Meerwasserkreis 8 vorhandene Meerwasser zur Luftbefeuchtung aus.

Bei der Ausführungsform der Figur 2 sind gleiche Teile mit gleichen Bezugszeichen wie in Figur 1 versehen. Diese Ausführungsform unterscheidet sich von der der Figur 1 im wesentlichen dadurch, daß hier zwei Einheiten, die jeweils aus einem Luft/Wasser-Wärmetauscher und einer Befeuchtungseinrichtung bestehen, hintereinander im Strömungsweg der Einlaßluft angeordnet sind. Ferner ist gegenüber der Ausführungsform der Figur 1 verschieden, daß bei der Ausführungsform der Figur 2 die Brennkraftmaschine mit Meerwasser gekühlt wird, so daß hierbei Meerwasser und somit Salzwasser zum Vorerhitzen der Einlaßluft verwendet wird.

Im einzelnen passiert bei der Ausführungsform der Figur 2 die Einlaßluft über ihren Strömungsweg 10 einen Luftfilter 3 und zwei Einheiten, die jeweils aus einem Luft/Wasser-Wärmetauscher 4 und einer nachfolgenden Befeuchtungseinrichtung 5 bestehen. Die Einlaßluft wird hierbei im ersten Wärmetauscher 4 (in der Figur links dargestellt) vorerhitzt und in der nachfolgenden Befeuchtungseinrichtung 5 mit Salzwasser 9 aus dem Salzwasserkreis 21 befeuchtet. Die aus der ersten Befeuchtungseinrichtung 5 austretende, jetzt wieder abgekühlte Luft dringt in den zweiten Wärmetauscher 4 ein und wird dort erneut erhitzt, wonach sie die zweite Befeuchtungseinrichtung 5, die ebenfalls aus der Leitung 9 mit Salzwasser versorgt wird, passiert. Sie gelangt dann über die Ansaugstutzen in die einzelnen Zylinder 2 der Schiffsdieselbrennkraftmaschine 1.

Die Einlaßluft wird bei dieser Ausführungsform sowohl durch Salzwasser vorerhitzt als auch durch Salzwasser befeuchtet. Die Brennkraftmaschine 1 besitzt eine Kühlwasserummantelung, die von Salzwasser durchströmt wird, das aus einem Meerwasserkreis 21 stammt. Aus der Kühlwasserummantelung zweigt ein Kühlwasserkreis 20 ab, der die beiden Wärmetauscher 4 mit heißem Kühlwasser versorgt. Das abgekühlte Kühlwasser strömt über den Kreis 20 in die Kühlwasserummantelung bzw. den Meerwasserkreis 21 zurück.

Bei den in den Figuren dargestellten Ausführungsformen sind Fördereinrichtungen, wie Rohre, Pumpen, nicht im einzelnen dargestellt.

Bei einer weiteren Ausführungsform der Erfindung wird die Luft nur teilweise befeuchtet. Danach werden die befeuchtete sowie trockene Luft wieder vermischt. Um den Anteil der befeuchteten Luft zu regeln, ist dabei vorzugsweise eine geeignete Regeleinrichtung vorgesehen. Die Regelung kann dabei manuell oder automatisch erfolgen, beispielsweise in Abhängigkeit von der Zylinderblocktemperatur etc. Diese Regeleinrichtung kann dabei ein geeignetes Ventil (Mischklappe) ansteuern, das die befeuchtete Luft mit der trockenen Luft in entsprechenden Anteilen vermischt. Eine derartige Teilbefeuchtung hat den Vorteil, daß die Vorrichtung insgesamt kleiner ausgebildet werden kann.

Bei noch einer weiteren Ausführungsform der Erfindung wird der vorgesehene Wärmetauscher in Abhängigkeit von der Belastung der Brennkraftmaschine gesteuert. Der Wärmetauscher kann dabei über eine Bypass-Leitung umgangen werden. Die Steuerung kann dabei beispielsweise so erfolgen, daß dann, wenn sich die Brennkraftmaschine im Leerlauf befindet, keine Erwärmung stattfindet.

## Patentansprüche

1. Vorrichtung zur Befeuchtung der Einlaßluft einer Brennkraftmaschine mit Luftansaugung, die einen Kühlwasserkreis aufweist, mit
einer Befeuchtungseinrichtung (5) für die Einlaßluft, durch die die Einlaßluft und Befeuchtungsflüssigkeit strömen und miteinander in Kontakt treten, und
einem stromauf der Befeuchtungseinrichtung (5) angeordneten, zum Vorerhitzen der Einlaßluft dienenden Luft/Wasser-Wärmetauscher (4) oder Luft/Luft-Wärmetauscher, der vom Kühlwasser oder vom Abgas der Brennkraftmaschine (1) und von der Einlaßluft durchströmt wird.

2. Vorrichtung nach Anspruch 1, dadurch gekennzeichnet, daß Luft/Wasser- oder Luft/Luft-Wärmetauscher (4) und Befeuchtungseinrichtung (5) stromauf vom Luftfilter (3) angeordnet sind.

3. Vorrichtung nach Anspruch 1 oder 2, dadurch gekennzeichnet, daß die Befeuchtungsflüssigkeit normales Salzwasser (Meerwasser) ist.

4. Vorrichtung nach einem der vorangehenden Ansprüche, dadurch gekennzeichnet, daß mehrere Luft/Wasser- oder Luft/Luft-Wärmetauscher/Befeuchtungseinrichtungseinheiten in Einlaßluftströmungsrichtung hintereinander angeordnet sind.

5. Vorrichtung nach Anspruch 3 oder 4, dadurch gekennzeichnet, daß sie eine Einrichtung zur Abtrennung von von der Einlaßluft mitgeführten Partikeln, insbesondere Salzpartikeln, Staubpartikeln, aufweist.

6. Vorrichtung nach einem der vorangehenden Ansprüche, dadurch gekennzeichnet, daß sie einen vom Kühlwasser und von Salzwasser durchströmten Wärmetauscher (7) besitzt.

7. Vorrichtung nach einem der vorangehenden Ansprüche, dadurch gekennzeichnet, daß sie so ausgebildet ist, daß die Einlaßluft nur teilweise befeuchtet wird und befeuchtete und trockene Luft danach wieder vermischt werden.

8. Vorrichtung nach einem der vorangehenden Ansprüche, dadurch gekennzeichnet, daß sie eine Einrichtung zum Regeln des Anteils der befeuchteten Luft aufweist.

9. Vorrichtung nach einem der vorangehenden Ansprüche, dadurch gekennzeichnet, daß der Luft/Wasser- oder Luft/Luft-Wärmetauscher (4) in Abhängigkeit von der Belastung der Brennkraftmaschine gesteuert ist.
